# EUROPÄISCHE PATENTSCHRIFT

(11) **EP 2 170 972 B1**
(45) Veröffentlichungstag und Bekanntmachung des Hinweises auf die Patenterteilung: **20.04.2011**
(21) Anmeldenummer: 08775066.7
(22) Anmeldetag: 15.07.2008
(51) Int. Cl.: C08G 18/08, C08G 18/42, C08L 75/04, C08K 3/00, C08K 5/3445

(54) **THERMOPLASTISCHES POLYURETHAN MIT ANTISTATISCHEN EIGENSCHAFTEN**
THERMOPLASTIC POLYURETHANE WITH ANTISTATIC PROPERTIES
POLYURÉTHANNE THERMOPLASTIQUE À PROPRIÉTÉS ANTISTATIQUES

(30) Priorität: 17.07.2007 EP 07112644
(43) Veröffentlichungstag der Anmeldung: 07.04.2010
(73) Patentinhaber: BASF SE, 67056 Ludwigshafen (DE)
(72) Erfinder: PRISSOK, Frank, 49448 Lemförde (DE); SCHÄFER, Frank, 32351 Stemwede (DE); EGBERS, Gitta, 49448 Lemförde (DE); KRECH, Rüdiger, 49356 Diepholz (DE); GÜNTHER, Carsten, 49419 Wagenfeld (DE)
(86) Internationale Anmeldenummer: PCT/EP2008/059206
(87) Internationale Veröffentlichungsnummer: WO 2009/010502

(56) Entgegenhaltungen:
- EP-A- 1 134 268
- WO-A-2004/005391
- US-A- 4 912 142
- GROSSE BÖWING, A. ET AL.: "Kinetics and reactor design aspects of the synthesis of ionic liquids?Experimental and theoretical studies for ethylmethylimidazole ethylsulfate" CHEMICAL ENGINEERING SCIENCE, Bd. 62, Nr. 6, März 2007 (2007-03), Seiten 1760-1769, XP002499784 Elsevier

## Beschreibung

### Beschreibung

Die vorliegende Erfindung betrifft antistatisches, thermoplastisches Polyurethan, enthaltend Ethylmethylimidazol-Ethylsulfat, ein Verfahren zur Herstellung von antistatischem, thermoplastischem Polyurethan, enthaltend Ethylmethylimidazol-Ethylsulfat und die Verwendung von Ethylmethylimidazol-Ethylsulfat zur Herstellung von antistatischem, thermoplastischem Polyurethan.

Weitere Ausführungsformen der vorliegenden Erfindung sind den Ansprüchen, der Beschreibung und den Beispielen zu entnehmen.

Statische Aufladungen können an elektrischen Nichtleitern oder durch Nichtleiter isolierte Gegenstände oder Personen auftreten und sind häufig unerwünscht, schädlich und teilweise gefährlich.

In vielen Fällen handelt es sich bei den elektrischen Nichtleitern um Polymere. Da diese Polymere meist nicht durch leitende Materialien ersetzt werden können, wird versucht, die Leitfähigkeit der Polymere durch die Zugabe von antistatischen Additiven zu erhöhen und so die betreffenden Gegenstände oder Materialien zu erden. Polymere, die antistatische Additive enthalten, so dass deren Durchgangswiderstand, gemessen nach IEC 60093 kleiner als 10¹⁰ Ω/cm ist, werden im Folgenden als antistatische Polymere bezeichnet. Ist der Durchgangswiderstand von antistatischen Materialien kleiner als 10⁸ Ω/cm, gilt der aus diesem Material gefertigte Gegenstand als "Etectronic Sensitive Device" (EDS).

Diese antistatischen Polymere können vielfältig eingesetzt werden. Neben Anwendungen im Schuhbereich werden antistatische Polymere für Elastomerrollen, im Bereich der Fertigung von elektronisch sensiblen Bauteilen und besonders im Bereich der pneumatischen Förderung von Schüttgut eingesetzt.

Antistatische Additive und antistatische Polymere sind bekannt. Beispielsweise werden in DE 3531660 antistatische Polyurethanschuhsohlen beschrieben. Die antistatische Wirkung wird durch 0,01 bis 0.3 Gew.-% chemisch gebundene Sulfonat-Gruppen erreicht. Die erreichten Durchgangswiderstände betragen <10⁸ Ω/cm.

Der Einsatz unterschiedlicher quarternärer Ammoniumsalze zur Erhöhung der Leitfähigkeit von Polymeren wird in EP 1134268 beschrieben. Es handelt sich dabei um Modifikationen handelsüblicher Antistatika wie Catafor F® oder Catafor PU® der Firma Rhodia. So werden bei hohen Konzentrationen Durchgangswiderstände von ca. 10⁷ Ω/cm erreicht. Die Beispiele aus EP 1134268 lassen eine deutliche Abhängigkeit des Durchgangswiderstandes von der Luftfeuchte erkennen.

DE 3528597 beschreibt den Einsatz von Rußen als Leitfähigkeitsverbesserer. Es werden Durchgangswiderstände von <10⁹ Ω/cm erreicht. Nachteilig ist hierbei die schwarze Färbung des Produktes und verringerte mechanische Eigenschaften bei Einsatz größerer Mengen von Ruß.

WO 2004/005391 betrifft die Verwendung von ionischen Flüssigkeiten in Polymeren als Weichmacher, offenbart aber auch, dass die ionischen Flüssigkeiten gleichzeitig als antistatisches Additiv wirken. Als Polymere können unter anderem auch elastomere oder vernetzte Polyurethane eingesetzt werden.

Ein Nachteil des Stands der Technik ist der teilweise immer noch sehr hohe Durchgangswiderstand eines solchen Polymers von >10⁸ Ω/cm und die Abhängigkeit der Durchgangswiderstände von der Luftfeuchtigkeit. Dadurch kann es trotz leitfähiger Zusätze zu statischen Aufladungen kommen.

Ein weiterer Nachteil der im Stand der Technik vorgeschlagenen antistatischen Additive ist deren teilweise mangelhafte Dauerwirkung, wodurch sich in bestimmten Fällen bereits nach wenigen Tagen der Durchgangswiderstand der Polymere erhöht.

Schließlich führen hohe Zusätze von bekannten antistatischen Additiven zu einer Verschlechterung der Materialeigenschaften.

Ein weiteres Problem bekannter antistatischer Additive ist, dass diese, vor allem bei der thermoplastischen Verarbeitung und Weiterverarbeitung von thermoplastischem Polyurethan nicht eingesetzt werden können, da diese Additive zu einem großen Teil nicht der für eine thermoplastische Verarbeitung und Weiterverarbeitung notwendigen, zum Teil mehrfachen Temperaturbelastung von ca. 220 °C für jeweils 5 bis 10 Minuten widerstehen. Weiter kommt es unter den Bedingungen der thermoplastischen Verarbeitung von Polyurethan häufig zu Wechselwirkungen der antistatischen Additive mit der Polymermatrix, wodurch die Polymermatrix negativ beeinflusst wird, beispielsweise durch Abbau der Polymerketten.

Zudem muss das Additiv bei der Verarbeitung mit thermoplastischem Polyurethan eine ausreichende Verträglichkeit mit der Polymermatrix aufweisen, damit es sich beim Aufschmelzen nicht abtrennt und im fertigen Produkt nicht durch Ausschwitzen oder Ausdampfen verlorengeht. Auch sollen sich die mechanischen Eigenschaften des thermoplastischen Polyurethans, zum Beispiel der Abrieb oder die elastomeren Eigenschaften, durch Zugabe des Additivs nicht deutlich verschlechtern.

Aufgabe der vorliegenden Erfindung war es daher, ein antistatisches thermoplastischen Polyurethan zu liefern, das die oben angegebenen Nachteile nicht zeigt. Insbesondere war es Aufgabe der vorliegenden Erfindung, ein antistatisches Polyurethan zu liefern, das sich problemlos thermoplastisch verarbeiten lässt, die Matrix des Polyurethans nicht negativ beeinflusst und bei dem das antistatische Additiv nach der Herstellung des antistatischen thermoplastischen Polyurethans nicht übermäßig ausblüht.

Die erfindungsgemäße Aufgabe wurde gelöst durch ein antistatisches, thermoplastisches Polyurethan, enthaltend Ethylmethylimidazol-Ethylsulfat.

Unter "Potyurethanen" sind im Sinn der Erfindung alle bekannten Polyisocyanat-Polyadditionsprodukte zu verstehen. Weiter sind unter Polyurethanen im Sinn der Erfindung Polymerblends, enthaltend Polyurethane und weitere thermoplastische Polymere, zu verstehen. Als weitere thermoplastische Polymere können beispielsweise ein Polyethylen, Polypropylen, Polyester, Polyether, Polystyrol, Polycarbonat, PVC, ABS, ASA, SAN, Polyacrylnitril, EVA, PBT, PET und Polyoxymethylen eingesetzt werden. Vorzugsweise beträgt der Gehalt an Polyisocyanat-Polyadditionsprodukten im Polyurethan mindestens 50 Gew.-%, bevorzugt mindestens 90 Gew.-% und insbesondere 100 Gew.-%.

Unter thermoplastischen Polyurethanen werden Polyurethane verstanden, die thermoplastische Eigenschaften zeigen. Dabei versteht man unter thermoplastischen Eigenschaften, dass das thermoplastische Polyurethan bei Erwärmen wiederholt aufschmelzbar ist und dabei plastisches Fließen zeigt.

Vorzugsweise ist das dem erfindungsgemäßen antistatischen thermoplastischen Polyurethan zugrundeliegende thermoplastische Polyurethan transparent.

Der Gehalt des von Ethylmethylimidazol-Ethylsulfat, bezogen auf das Gesamtgewicht des erfindungsgemäßen antistatischen thermoplastischen Polyurethans, beträgt üblicherweise 0,001 bis 30 Gew.-%, besonders bevorzugt 0,1 bis 5 Gew.-%.

Erfindungsgemäßes antistatisches thermoplastisches Polyurethan wird üblicherweise hergestellt, indem man (a) organische und/oder modifizierte Polyisocyanate mit (b) mindestens einer höhermolekularen Verbindung mit gegenüber Isocyanaten reaktiven Wasserstoffatomen und (c) gegebenenfalls niedermolekularen Kettenverlängerungsmitteln, (d) antistatischem Additiv, enthaltend Ethylmethylimidazol-Ethylsulfat, (e) Katalysatoren und (f) gegebenenfalls sonstigen Zusatzstoffen, zu einer Reaktionsmischung vermischt und ausreagieren lässt.

Als Isocyanate (a), üblicherweise Diisocyanate, können aliphatische, cycloaliphatische, araliphatische und/oder aromatische Diisocyanate eingesetzt werden. Im einzelnen seien beispielhaft die folgenden aromatische Isocyanate genannt: 2,4-Toluylen-diisocyanat, Gemische aus 2,4- und 2,6-Toluylen-diisocyanat, 4,4'-, 2,4'- und/oder 2,2'-Diphenylmethan-diisocyanat, Gemische aus 2,4'- und 4,4'-Diphenylmethan-diisocyanat, urethanmodifizierte flüssige 4,4'- und/oder 2,4-Diphenylmethandiisocyanate, 4,4'-Diisocyanato-diphenylethan-(1,2) und 1,5-Naphthylen-düsocyanat. Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat. Bevorzugt wird Hexamethylen-1,6-diisocyanat (Hexamethylendiisocyanat, HDI) und/oder 4,4'-, 2,4'- und/oder 2,2'-Diphenylmethan-düsocyanat (MDI) als Isocyanat (a) eingesetzt.

Als höhermolekulare Verbindungen mit gegenüber Isocyanaten reaktiven Wasserstoffatomen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten zwischen 500 und 8000, bevorzugt 600 bis 6000, insbesondere 800 bis weniger als 3000, und bevorzugt einer mittleren Funktionalität gegenüber Isocyanaten von 1,8 bis 2,3, bevorzugt 1,9 bis 2,2, insbesondere 2.

So können beispielsweise Polyetherpolyole eingesetzt werden, wie solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylenglykole.

Als Polyesterole können Polyester auf Basis von Disäuren und Diolen eingesetzt werden. Als Diole werden vorzugsweise Diole mit 2 bis 10 Kohlenstoffatomen, beispielsweise Ethandiol, Butandiol oder Hexandiol, insbesondere 1,4 Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus. Vorzugsweise wird Adipinsäure als Disäure eingesetzt.

Als Kettenverlängerungsmittel (c) werden allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können. Das Gewichtsverhältnis der höhermolekularen Verbindung mit gegenüber Isocyanaten reaktiven Wasserstoffatomen (b) zu Kettenverlängerer (c), kann 0,5 : 1 bis 20 : 1, vorzugsweise 1,5 : 1 bis 13 : 1 betragen , wobei ein höherer Anteil an Kettenverlängerer zu einem härteren Produkt führt.

Als antistatisches Additiv (d) wird ein Additiv, enthaltend Ethylmethylimidazol-Ethylsulfat eingesetzt. Dabei kann Ethylmethylimidazol-Ethylsulfat alleine oder in einer Mischung, beispielsweise zusammen mit anderen antistatisch wirkenden Additiven, eingesetzt werden. Vorzugsweise wird Ethylmethylimidazol-Ethylsulfat als alleiniges antistatisches Additiv eingesetzt. Der Gehalt des von Ethylmethylimidazol-Ethylsulfat, bezogen auf das Gesamtgewicht der Komponenten (a) bis (g), beträgt üblicherweise 0,001 bis 30 Gew.-%, besonders bevorzugt 0,1 bis 5 Gew.-%. Es ist ebenfalls möglich, das antistatische Additiv (d) in Form eines Wikstoffkonzentrats einzusetzen. Ein solches Wirkstoffkonzentrat enthält beispielsweise 30 bis 80 Gew.-% Ethylmethylimidazol-Ethylsulfat und 70 bis 20 Gew.-% thermoplastisches Polyurethan.

Geeignete Katalysatoren (e), welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxypethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.

Als sonstige Zusatzstoffe (f) seien beispielsweise Treibmittel, oberflächenaktive Substanzen, Füllstoffe, Keimbildungsmittel, Gleit- und Entformungshilfen, Farbstoffe und Pigmente, Antioxidantien, z.B. gegen Hydrolyse, Licht, Hitze oder Verfärbung, Metalldeaktivatoren, anorganische und/oder organische Füllstoffe, Verstärkungsmittel und Weichmacher genannt.

Als Hydrolyseschutzmittel werden bevorzugt oligomere und/oder polymere aliphatische oder aromatische Carbodiimide verwendet.

Um die erfindungsgemäßen, antistatischen, thermoplastischen Polyurethane gegen Alterung zu stabilisieren, werden dem antistatischen, thermoplastischen Polyurethan bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136.

Ist das erfindungsgemäße, antistatische, thermoplastische Polyurethan während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98-107 und S 116-S. 121. Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl)propionate) (Irganox^{®} 1010). Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des TPU.

Wird erfindungsgemäßes antistatisches, thermoplastisches Polyurethan UV-Licht ausgesetzt, enthält dieses vorzugsweise zusätzlich einen UV-Absorber. UV-Absorber sind Moleküle, die energiereiches UV-Licht absorbieren und die Energie dissipieren. Gängige UV-Absorber, welche in der Technik Verwendung finden, gehören z.B. zur Gruppe der Zimtsäureester, der Diphenylcyanacrylate, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seite 116-122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber ein Molekulargewicht von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin^{®} 213, Tinuvin^{®} 328, Tinuvin^{®} 571, sowie Tinuvin^{®} 384 und das Eversorb®82. Bevorzugt werden die UV-Absorber in Mengen zwischen 0,01 und 5 Gew.-%, bezogen auf die Gesamtmasse antistatisches, thermoplastisches Polyurethan zudosiert, besonders bevorzugt zwischen 0,1 und 2,0 Gew.-%, insbesondere zwischen 0,2 und 0,5 Gew.-%, jeweils bezogen auf das Gesamtgewicht des antistatischen thermoplastischen Polyurethans.

Oft ist eine oben beschriebene UV-Stabilisierung basierend auf einem Antioxidant und einem UV-Absorber noch nicht ausreichend, um eine gute Stabilität des erfindungsgemäßen antistatischen, thermoplastischen Polyurethans gegen den schädlichen Einfluss von UV-Strahlen zu gewährleisten. In diesem Falle kann zu der Komponente (e) bevorzugt zusätzlich zu dem Antioxidans und dem UV-Absorber, noch ein Hindered-Amine Light Stabiizer (HALS) zu dem erfindungsgemäßen antistatischen, thermoplastischen Polyurethan zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136. Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen bevorzugt nicht größer als 10000 g/mol, besonders bevorzugt nicht größer als 5000 g/mol sein. Besonders bevorzugter Hindered Amine Light Stabilizer ist das Kondensationsprodukt aus 1-hydroxyethyl-2,2,6,6-tetramethyl-4-hydroxypiperidine und Bernsteinsäure (Tinuvin^{®} 622). HALS Verbindungen werden bevorzugt in einer Konzentration zwischen 0,01 und 5 Gew.-% eingesetzt, besonders bevorzugt zwischen 0,1 und 1 Gew.-%, insbesondere zwischen 0,15 und 0,3 Gew.-%, jeweils bezogen auf das Gesamtgewicht des antistatischen, thermoplastischen Polyurethan. Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Als Weichmacher können alle für die Verwendung in TPU bekannten Weichmacher eingesetzt werden. Diese umfassen beispielsweise Verbindungen, die mindestens eine phenolische Gruppe enthalten. Solche Verbindungen sind in EP 1529814 beschrieben. Weiter können beispielsweise auch Polyester mit einem Molekulargewicht von ca. 500 bis 1500 g/mol auf Basis von Dicarbonsäuren, Benzoesäure und mindestens einem Di-oder Triol, vorzugsweise einem Diol eingesetzt werden. Als Disäurekomponente werden vorzugsweise Bernsteinsäure, Glutarsäure, Adipinsäure, Korksäure, Azelainsäure, Dekandicarbonsäure, Maleinsäure, Fumarsäure, Phthalsäure, Isophthalsäure und/oder Terephthalsäure und als Diol werden vorzugsweise Ethan-1, 2-diol, Diethylenglykol, Propan-1,2-diol, Propan-1, 3-diol, Dipropylenglykol, Butan-1,4-diol, Pentan-1, 5-diol und/oder Hexan-1,6-diol eingesetzt. Dabei beträgt das Verhältnis von Dicarbonsäure zu Benzoesäure vorzugsweise 1 : 10 bis 10 : 1. Solche Weichmacher sind beispielsweise in EP 1556433 näher beschrieben.

Der Anteil des Weichmachers am Gesamtgewicht des antistatischen thermoplastischen Polyurethans beträgt vorzugsweise zwischen 0,2 und 45 Gew.-%.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001. Alle in dieser Schrift genannten Molekulargewichte weisen die Einheit [g/mol] auf.

Zur Herstellung des erfindungsgemäßen antistatischen thermoplastischen Polyurethans werden die organische und/oder modifizierte Polyisocyanate (a) mit der mindestens einen höhermolekularen Verbindung mit gegenüber Isocyanaten reaktiven Wasserstoffatomen (b) gegebenenfalls niedermolekularen Kettenverlängerungsmitteln (c), antistatischem Additiv (d), enthaltend Ethylmethylimidazol-Ethylsulfat, Katalysatoren (e), und gegebenenfalls sonstigen Zusatzstoffen (f), vorzugsweise in solchen Mengen zur Umsetzung gebracht, dass der Isocyanatindex im Bereich von 90 bis 110, bevorzugt 92 - 105 und besonders bevorzugt 95 - 101 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Herstellung des erfindungsgemäßen antistatischen thermoplastischen Polyurethans kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren werden die eingesetzten Komponenten (a), (b), gegebenenfalls (c), (d), (e) und gegebenenfalls (f) nacheinander oder gleichzeitig miteinander zu einer Reaktionsmischung vermischt, wobei die Reaktion unmittelbar einsetzt.

Beim Extruderverfahren werden die Komponenten (a), (b), gegebenenfalls (c), (d), (e) und gegebenenfalls (f) einzeln oder als Gemisch in den Extruder eingeführt, z.B. bei Temperaturen von 100 bis 280 °C, vorzugsweise 140 bis 250 °C, und zum antistatischen thermoplastischen Polyurethan umgesetzt. Das erhaltene antistatische, thermoplastische Polyurethan wird üblicherweise extrudiert, abgekühlt und granuliert. Nach der Synthese kann das antistatische, thermoplastische Polyurethan gegebenenfalls durch Konfektionierung auf einem Extruder modifiziert werden. Durch diese Konfektionierung kann das antistatische, thermoplastische Polyurethan z.B. in seinem Schmelzindex oder seiner Granulatform entsprechend den Anforderungen modifiziert werden.

In einer weiteren Ausführungsform wird ein thermoplastisches Polyurethan unter Einsatz der Komponenten (a), (b), gegebenenfalls (c), (e) und gegebenenfalls (f) nach den oben genannten Verfahren hergestellt. Anschließend wird dieses thermoplastische Polyurethan, vorzugsweise in einem Extruder, mit einem Wirkstoffkonzentrat, enthaltend ein theroplastisches Polyurethan mit einer hohen Konzentration an antistatischem Additiv (d), beispielsweise 30 bis 80 Gew.-%, bezogen auf das Gesamtgewicht des Wirkstoffkonzentrats, zu dem erfindungsgemäßen thermoplastischen Polyurethan extrudiert.

Die Verarbeitung des erfindungsgemäß hergestellten antistatischen, thermoplastischen Polyurethans, das üblicherweise als Granulat oder in Pulverform vorliegt, zu Spritzguss- und Extrusionsartikeln, z.B. den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Derartige Spritzguss- und Extrusionsartikel können auch aus Compounds, enthaltend das erfindungsgemäße antistatische, thermoplastische Polyurethan und mindestens einen weiteren thermoplastischen Kunststoff, besonders ein Polyethylen, Polypropylen, Polyester, Polyether, Polystyrol, Polycarbonat, PVC, ABS, ASA, SAN, Polyacrylnitril, EVA,PBT, PET, Polyoxymethylen, bestehen. Insbesondere lässt sich das erfindungsgemäße antistatische Polyurethan zur Herstellung von transparenten Gegenständen, wie transparente Förderschläuchen für pulverförmige Fördermaterialien, transparente Schuhsohlen, transparente Folien und Schläuche, sowie transparente Kabelmäntel verarbeiten. Dabei ist die Herstellung von transparentem Polyurethan dem Fachmann bekannt. So kann transparentes Polyurethan beispielsweise durch eine schnelle Abkühlung der TPU-Schmelze oder durch Einsatz relativ kurzkettiger Polyole erhalten werden.

Überraschenderweise löst sich Ethylmethylimidazol-Ethylsulfat transparent in thermoplastischem Polyurethan, wodurch unter Verwendung von transparentem thermoplastischem Polyurethan transparente, antistatische Materialien erhalten werden. Solche Materialien können beispielsweise zur Herstellung von Förderschläuchen zum Fördern von pulverformigen Materialien eingesetzt werden. Weiter zeigen erfindungsgemäße antistatische thermoplastische Polyurethane sehr gute mechanische Eigenschaften, wie Abrieb, Zugfestigkeit und Reißdehnung, die bei gleichen Leitfähigkeiten gegenüber dem Einsatz herkömmlicher antistatischer Additive verbessert sind. Ausblühen von Ethylmethylimidazol-Ethylsulfat aus fertigen Teilen wird nur in geringem Maße, entsprechend anderer Additive des Stands der Technik, beobachtet.

Die vorliegende Erfindung soll durch nachfolgende Beispiele veranschaulicht werden:
Gemäß Tabelle 1 wurden in einem Reaktionsextruder die folgenden thermoplastischen Polyurethane hergestellt, granuliert und auf einer handelsüblichen Spritzgussmaschine zu 2 mm und 6 mm dicken Prüfplatten verarbeitet und anschließend einer mechanischen und optischen Prüfung unterzogen. Die Zusammensetzung der Ausgangssubstanzen sowie die Ergebnisse der Prüfung sind in Tabelle 1 angegeben.

**Tabelle 1**

| | Bsp.1 | Bsp. 2 | Bsp. 3 | Bsp. 4 | V1 | V2 | V3 | V4 |
|---|---|---|---|---|---|---|---|---|
| Iso | 18,5 | 18,5 | 18,5 | 18,5 | 18,5 | 18,5 | 18,5 | 18,5 |
| Polyol | 51,4 | 51,4 | 51,4 | 51,4 | 51,4 | 51,4 | 51,4 | 51,4 |
| KV | 4,7 | 4,7 | 4,7 | 4,7 | 4,7 | 4,7 | 4,7 | 4,7 |
| | | | | | | | | |
| Weichmacher | 25 | 25 | 25 | 25 | 25 | 25 | 25 | 25 |
| CDM | 0,4 | 0,4 | 0,4 | 0,4 | 0,4 | 0,4 | 0,4 | 0,4 |
| AS1 | 0,5 | 1,0 | 2,0 | 0,8 | - | - | - | - |
| AS2 | - | - | - | - | - | 1,5 | - | - |
| AS3 | - | - | - | - | - | - | 0,8 | 2,0 |
| | | | | | | | | |
| DUWI | 6,4E+ 07 | 3,1E+ 07 | 1,5E+ 07 | 3,5E+ 07 | 3,0E+ 10 | 1,9E+ 09 | 1,5E+ 08 | 6,0E+ 07 |
| Abrieb | 85 | 106 | 139 | 172 | 78 | 70 | 158 | 150 |
| Zug | 29 | 28 | 30 | 22 | 44 | 32 | 21 | 18 |
| Dehnung | 870 | 880 | 850 | 900 | 820 | 910 | 900 | 940 |
| Transp. | J | J | J | J | J | N | N | N |
| Härte | 65 | 64 | 64 | 60* | 65 | 63 | 60 | 62 |
| Ausblüh | 2 | 2 | 3 | 2 | 2 | 4 | 4 | 5 |
| MFR | 27,5 | 32,7 | 31,2 | n.g. | 24,8 | 62 | n.g. | 103 |
| MW Abbau | 1 | 2 | 2 | - | - | 4 | - | 5 |

| | | | | | | | | |
|---|---|---|---|---|---|---|---|---|
| * bedingt durch Konzentratzugabe | | | | | | | | |

Dabei bedeutet:
- Iso:: 4,4'-Methylendiphenylendüsocyanat
- Polyol:: Butandioladipat Molekulargewicht 2400 g/mol
- KV:: Kettenverlängerer 1,4-Butandiol
- Weichmacher:: Dipropylenglykol-dibenzoat
- CDM:: Hydrolyseschutzmittel Carbodiimid
- AS1:: Antistatikum Ethylmethylimidazol-Ethylsulfat
- AS2:: Antistatikum Dehydat® 80X der Firma Cognis (Sulfonsaures C13-C17 Alkan-Natriumsalz)
- AS3:: Antistatikum Catafor® PU der Firma Rodia (quarternäres Ammoniumsalz)
- DUWI:: Spezifischer Durchgangswiderstand in Ω/cm
- Abrieb:: Abrieb nach DIN 53516 in mm³
- Zug:: Zugfestigkeit nach DIN 53504 in N/mm²
- Dehnung:: Reißdehnung nach DIN 53504 in %
- Transp.:: Transparent ja/nein
- Härte:: Shore A-Härte nach DIN 53505
- Ausblüh:: Menge an ausgeblühtem Additiv auf einer Skala 1 bis 5 (1 = keine Ausblühung, 5 = starke Ausblühung)
- MFR: Schmelzflussrate bei 190°C/3,8kg nach DIN EN ISO 1133
- MW Abbau: Relativer Molekulargewichtsabbau gegenüber Basispolymer auf einer Skala von 1 bis 5 (1 = kein Abbau, 5 = starker Abbau)
- n.g.: nicht gemessen
V1 ist das Basismaterial ohne Antistatika.

Bei Beispiel 4 wurden V1-0,8% Antistatikum in Form eines 20%igen Konzentrates vor der Spritzgussverarbeitung zugegeben.

## Patentansprüche

1. Antistatisches, thermoplastisches Polyurethan, enthaltend Ethylmethylimidazol-Ethylsulfat.

2. Antistatisches, thermoplastisches Polyurethan nach Anspruch 1, **dadurch gekennzeichnet, dass** das antistatische, thermoplastische Polyurethan transparent ist.

3. Antistatisches, thermoplastisches Polyurethan nach Anspruch 1 oder 2, **dadurch gekennzeichnet, dass** Ethylmethylimidazol-Ethylsulfat in einer Menge von 0,001 bis 30 Gew.-%, bezogen auf das Gesamtgewicht des thermoplastischen Polyurethans, enthalten ist.

4. Antistatisches, thermoplastisches Polyurethan nach Anspruch 3, **dadurch gekennzeichnet, dass** Ethylmethylimidazol-Ethylsulfat in einer Menge von 0,1 bis 5 Gew.-%, bezogen auf das Gesamtgewicht des thermoplastischen Polyurethans, enthalten ist.

5. Förderschlauch, enthaltend antistatisches, thermoplastisches Polyurethan nach einem der Ansprüche 2 bis 4.

6. Folien, Schläuche und Kabelmäntel , enthaltend antistatisches, thermoplastisches Polyurethan nach einem der Ansprüche 1 bis 4.

7. Schuhsohlen, enthaltend antistatisches, thermoplastisches Polyurethan nach einem der Ansprüche 1 bis 4.

8. Wirkstoffkonzentrat, enthaltend 30 bis 80 Gew.-%, bezogen auf das Gesamtgewicht des Wirkstoffkonzentrats, Ethylmethylimidazol-Ethylsulfat und 70 bis 30 Gew.-% thermoplastisches Polyurethan.

9. Verfahren zur Herstellung von antistatischem, thermoplastischem Polyurethan nach einem der Ansprüche 1 bis 4, bei dem man
a) organische und/oder modifizierte Polyisocyanate mit
b) mindestens einer höhermolekularen Verbindung mit gegenüber Isocya- nat reaktiven Wasserstoffatomen und
c) gegebenenfalls niedermolekularen Kettenverlängerungsmitteln,
d) antistatischem Additiv, enthaltend Ethylmethylimidazol-Ethylsulfat,
e) Katalysatoren und
f) gegebenenfalls sonstigen Zusatzstoffen, zu einer Reaktionsmischung vermischt und ausreagieren lässt.

10. Verwendung von Ethylmethylimidazol-Ethylsulfat zur Herstellung von antistatischem, thermoplastischem Polyurethan.

## Claims

1. An antistatic, thermoplastic polyurethane, comprising ethylmethylimidazole ethyl sulfate.

2. The antistatic, thermoplastic polyurethane according to claim 1, which is transparent.

3. The antistatic, thermoplastic polyurethane according to claim 1 or 2, wherein the amount present of ethylmethylimidazole ethyl sulfate, based on the total weight of the thermoplastic polyurethane, is from 0.001 to 30% by weight.

4. The antistatic, thermoplastic polyurethane according to claim 3, wherein the amount present of ethylmethylimidazole ethyl sulfate, based on the total weight of the thermoplastic polyurethane, is from 0.1 to 5% by weight.

5. A conveying hose, comprising antistatic, thermoplastic polyurethane according to any of claims 2 to 4.

6. A foil, hose, or cable sheath, comprising antistatic, thermoplastic polyurethane according to any of claims 1 to 4.

7. A shoe sole, comprising antistatic, thermoplastic polyurethane according to any of claims 1 to 4.

8. An active-ingredient concentrate comprising from 30 to 80% by weight, based on the total weight of the active-ingredient concentrate, of ethylmethylimidazole ethyl sulfate and from 70 to 30% by weight of thermoplastic polyurethane.

9. A process for production of antistatic, thermoplastic polyurethane according to any of claims 1 to 4, by mixing
a) organic and/or modified polyisocyanates with
b) at least one relatively high-molar-mass compound having hydrogen atoms reactive toward isocyanate, and
c) optionally low-molar-mass chain extenders,
d) an antistatic additive comprising ethylmethylimidazole ethyl sulfate,
e) catalysts, and
f) optionally other additives, to give a reaction mixture and permitting completion of the reaction mixture.

10. The use of ethylmethylimidazole ethyl sulfate for production of antistatic, thermoplastic polyurethane.

## Revendications

1. Polyuréthane antistatique, thermoplastique, contenant de l'éthylsulfate d'éthylméthyli.mïdazole.

2. Polyuréthane antistatique thermoplastique selon la revendication 1, **caractérisé en ce que** le polyuréthane antistatique thermoplastique est transparent.

3. Polyuréthane antistatique thermoplastique selon la revendication 1 ou 2, **caractérisé en ce que** l'éthylsulfate d'éthylméthylimidazole est contenu en une quantité de 0,001 à 30% en poids, par rapport au poids total du polyuréthane thermoplastique :

4. Polyuréthane antistatique thermoplastique selon la revendication 3, **caractérisé en ce que** l'éthylsulfate d'éthylméthylimidazole est contenu en une quantité de 0,1 à 5% en poids, par rapport au poids total du polyuréthane thermoplastique.

5. Flexible de transport, contenant le polyuréthane antistatique thermoplastique selon l'une quelconque des revendications 2 à 4.

6. Feuilles, 1 flexibles et gaines de câbles contenant le polyuréthane antistatique thermoplastique selon l'une quelconque des revendications 1 à 4.

7. Semelles pour chaussures, contenant le polyuréthanne antistatique thermoplastique selon l'une quelconque des revendications 1 à 4.

8. Concentrat de substance active contenant 30 à 80% en poids, par rapport au poids total du concentrat de substance active, d'éthylsulfate d'éthylméthylimidazole et 70 à 30% en poids de polyuréthane thermoplastique.

9. Procédé pour la préparation de polyuréthane antistatique, thermoplastique selon l'une quelconque des revendications 1 à 4, dans lequel on mélange
a) des polyisocyanates organiques et/ou modifiés avec
b) au moins un composé à poids moléculaire élevé présentant des atomes d'hydrogène réactifs par rapport à isocyanate et
c) le cas échéant des agents d'allongement de chaîne de bas poids moléculaire,
d) un additif antistatique contenant de l'éthylsulfate d'éthylméthylimidazole.
e) des catalyseurs et
f) le cas échéant d'autres additifs en un mélange réactionnel et on .le laisse réagir.

10. Utilisation d'éthylsulfate d'éthylméthylimidazole pour la préparation de polyurethane antistatique thermoplastique. _
